# Europäisches Patentamt
# European Patent Office
# Office européen des brevets

(11) Veröffentlichungsnummer: **0 067 331**
**A2**

(12) **EUROPÄISCHE PATENTANMELDUNG**

(21) Anmeldenummer: **82104608.3**

(22) Anmeldetag: **26.05.82**

(51) Int. Cl.³: **A 22 B 5/20**

(30) Priorität: **12.06.81 DE 3123439**

(43) Veröffentlichungstag der Anmeldung:
**22.12.82 Patentblatt 82/51**

(84) Benannte Vertragsstaaten:
**AT BE CH DE FR GB IT LI NL SE**

(71) Anmelder: **BANSS KG Maschinenfabrik**
**Industriestrasse**
**D-3560 Biedenkopf(DE)**

(72) Erfinder: **Gerlach, Curt**
**Urbannstrasse 7**
**D-3560 Biedenkopf(DE)**

(74) Vertreter: **Dr. Elisabeth Jung Dr. Jürgen Schirdewahn**
**Dr. Gerhard Schmitt-Nilson Dr. Gerhard B. Hagen**
**Dipl.-Ing. Peter Hirsch**
**Clemensstrasse 30 Postfach 40 14 68**
**D-8000 München 40(DE)**

(54) **Vorrichtung zum Halbieren von Schlachttierkörpern mittels einer Bandsäge.**

㉭ Vorrichtung zum automatischen Halbieren der Körper geschlachteter Tiere, insbesondere Schweine, die hängend kontinuierlich weiterbewegt werden. Der zu halbierende Tierkörper ist rückseitig beidseits der Wirbelsäule während des Sägevorgangs mit Hilfe von Saugnäpfen in seiner Lage gehalten. Die Halbierung erfolgt mittels einer Bandsäge , und sowohl die Bandsäge als auch die Saugnäpfe werden mit einer der Weiterbewegungsgeschwindigkeit der Tierkörper entsprechenden Geschwindigkeit bewegt. Die Bandsäge ist für den Sägevorgang in Längsrichtung des jeweiligen Tierkörpers bewegbar und ist überdies zwischen einer Säge-Betriebsstellung und einer Ruhestellung außerhalb der Weiterbewegungsbahn des Tierkörpers bewegbar.

FIG. 1

EP 0 067 331 A2

Croydon Printing Company Ltd.

Vorrichtung zum Halbieren von Schlachttierkörpern mittels einer Bandsäge

Die Erfindung bezieht sich auf eine Vorrichtung gemäß Oberbegriff des Anspruchs 1.

Von dem Halbieren von Schlachttierkörpern mit Hilfe von Kreissägen, Stichsägen und Spaltmessern unterscheidet sich das Halbieren mit Hilfe einer Bandsäge vorteilhaft dadurch, daß das Sägewerkzeug nicht zum Verschmieren neigt, daß der gesamte Tierkörper problemlos in einem einzigen Sägevorgang halbiert werden kann und daß im Vergleich zum Halbieren mit einem Spaltmesser wesentlich geringere Kräfte aufgebracht werden müssen.

Das Halbieren von Schlachttierkörpern mit Hilfe einer Bandsäge ist aus der US-PS 3 790 989 bekannt. Diese bekannte Vorrichtung arbeitet mit einer stationären Bandsäge, deren Sägeband über vier Scheiben im wesentlichen rechteckig geführt ist. Der jeweils zu halbierende Tierkörper ist mit zwei Haken an seinen Hinterbeinen aufgehängt, und die Haken können auf zwei Schienen rollend weiterbewegt werden. Der jeweilige Tierkörper wird durch
Weiterbewegen der Haken in Eingriff mit der stationären Bandsäge
gebracht und unter Weiterbewegung halbiert. Es hat sich gezeigt,
daß der frei an den Haken hängende Tierkörper nicht immer sauber
in der Mitte halbiert wird, da seine Wirbelsäule häufig nicht
ausreichend genau in Richtung des Sägevorgangs hängt und da der
frei hängende Tierkörper zum Pendeln und zu unkontrolliertem
Ausweichen unter der  Einwirkung des Sägebandes neigt. Da der
jeweils sägende Abschnitt des Sägebandes größer als die Länge
des Schlachttierkörpers sein muß, ergeben sich auf diesem Abschnitt unkontrollierte Abweichungen des Sägebandes vom gewünschten, geradlinigen Verlauf. Außerdem bringt das permanent in der
Bewegungsbahn der Tierkörper befindliche Sägeband eine Gefährdung des Personals mit sich.

Der Erfindung liegt die Aufgabe zugrunde, eine Vorrichtung der
eingangs genannten Art zum exakten Halbieren von Schlachttierkörpern in deren Wirbelsäule zu schaffen.

Zur Lösung dieser Aufgabe ist die Vorrichtung erfindungsgemäß
so ausgebildet, wie im kennzeichnenden Teil des Anspruchs 1 angegeben.

Der jeweilige Tierkörper ist während des Sägevorgangs in seiner
Lage gehalten, so daß die Voraussetzungen für einen exakt liegenden Sägevorgang günstig sind. Der Einsatz von Saugnäpfen für
diesen Zweck hat sich als günstig herausgestellt, da sie geeignet sind, den, insbesondere im Fall von geschlachteten Schweinen, in sich labilen, "schwabbeligen" Tierkörper ausreichend
in seiner Lage zu halten. Die Mitbewegung der Bandsäge und der
Saugnäpfe mit dem jeweiligen Tierkörper schafft für den gesamten Sägevorgang gleichbleibende Bedingungen. Da der Vorschub
der Bandsäge für den Sägevorgang im wesentlichen in Richtung
der Wirbelsäule erfolgt und da der jeweils sägende Abschnitt des
Sägebandes wesentlich kürzer gehalten werden kann, sich beispielsweise nur von der Bauchseite zur Rückenseite des Schlachttieres erstreckt, ist die Gefahr eines unerwünschten Verlaufens

des Sägebandes minimiert. Da das Sägeband nach jedem Sägevorgang aus der Weiterbewegungsbahn der Tierkörper herausbewegbar ist, ist die diesbezügliche Gefährdung des Bedienungspersonals ausgeschaltet.

Die Tierkörper sind vorzugsweise an den Hinterbeinen hängend an Haken aufgehängt, die die Hinterbeine des jeweiligen Tierkörpers spreizen. Die Weiterbewegung der Tierkörper erfolgt vorzugsweise durch Verschieben der Haken auf einer geeigneten Bahn, wobei die Weiterbewegung vorzugsweise in Querrichtung der Tierkörper erfolgt. Vorzugsweise werden die Tierkörper von oben nach unten mit der Bandsäge halbiert.

Es ist möglich, mit einer Bandsäge zu arbeiten, deren jeweils sägender Sägebandabschnitt waagrecht liegt und die mit waagrecht liegendem Sägebandabschnitt in Längsrichtung des Tierkörpers vorgeschoben wird. In bevorzugter Ausgestaltung der Erfindung ist jedoch vorgesehen, daß der Winkel, den der jeweils sägende Abschnitt des Sägebandes in der Ebene des Sägevorgangs mit der Längsrichtung des Tierkörpers bildet, änderbar ist. Auf diese Weise kann man zum Beispiel beim Beginn des Sägevorgangs mit einer Sägebandwinkelstellung, die von der Bauchseite des Tierkörpers zur Rückenseite schräg aufwärts führt, im weiteren Verlauf des Sägevorgangs mit im wesentlichen horizontaler Sägebandstellung und am Ende des Sägevorgangs mit einer Sägebandwinkelstellung, die von der Bauchseite schräg abwärts zur Rückenseite verläuft, arbeiten. Es hat sich gezeigt, daß sich auf diese Weise am Anfang des Sägevorgangs ein optimales Ansägen des relativ weichen Schwanzknochens ergibt und daß man am Ende des Sägevorgangs ein optimales Ergebnis im kopfseitigen Endbereich der Wirbelsäule erhält.

Obwohl man bereits mit einem einzigen Saugnapfpaar ein zufriedenstellendes Halten des Tierkörpers bewerkstelligen kann, ist in Weiterbildung der Erfindung bevorzugt, daß auf jeder Seite der Wirbelsäule des Tierkörpers mehrere Saugnäpfe längs des Tierkörpers verteilt vorgesehen sind. Dies ergibt ein noch präzise-

- 4 -

res Halten des Tierkörpers während des Sägevorgangs. Die beidseitig der Wirbelsäule vorgesehenen Saugnäpfe sind vorzugsweise in Draufsicht V-förmig angeordnet, was ebenfalls der Stabilität der Lagefixierung förderlich ist.

Vorzugsweise sind die Saugnäpfe von einem Saugnäpfe-Tragrahmen gehalten und ist der Saugnäpfe-Tragrahmen dem jeweiligen Tierkörper näherbar und von diesem entfernbar. Mit dieser Weiterbildung ist es möglich, die Saugnäpfe nach jedem Sägevorgang insgesamt aus der Bewegungsbahn der Tierkörper zurückzuziehen und beim nächsten Tierkörper erneut vorzufahren. Andererseits ist es jedoch durchaus auch möglich, ohne diese Verfahrbarkeit eines Saugnäpfe-Tragrahmens auszukommen, indem man beispielsweise jeden neuen Tierkörper durch Schwenken um seinen Aufhängepunkt beziehungsweise seine Aufhängepunkte ordnungsgemäß vor die Saugnäpfe bringt.

Eine weitere Weiterbildung der Erfindung besteht darin, daß die Saugnäpfe, vorzugsweise einzeln, in ihrer Axialrichtung bewegbar sind. Vorzugsweise werden die Saugnäpfe in ihrer Axialrichtung, also in einer Richtung im wesentlichen rechtwinklig zur den Tierkörper kontaktierenden Fläche des jeweiligen Saugnapfes, entsprechend dem Fortgang des Sägevorgangs der Reihe nach, vorzugsweise paarweise auf beiden Seiten der Wirbelsäule, unter Beibehaltung des Unterdrucks zurückgezogen. Auf diese Weise wird der Tierkörper hinter dem sich in Richtung des Sägevorgangs vorwärts bewegenden Sägebands keilartig auseinandergezogen, wodurch ein sauberer Sägevorgang ohne jegliche Gefahr des Verklemmens des Sägebandes erreicht wird.

Eine weitere Weiterbildung der Erfindung besteht darin, daß die Saugnäpfe einzeln oder pro auf jeder Seite der Wirbelsäule vorgesehene Saugnapfreihe gemeinsam schwenkbar sind, vorzugsweise um eine vertikale Achse.

Durch die soeben beschriebenen Bewegungsmöglichkeiten kann man die Saugnäpfe optimal auf die Gestalt der Tierkörper einstel-

- 5 -

len, im Extremfall diese Einstellung sogar auf jeden individuellen Tierkörper vornehmen. Es ist auch möglich, die soeben beschriebenen Bewegungsmöglichkeiten der Saugnäpfe statt der Bewegungsmöglichkeit nach Anspruch 4 oder zusätzlich zu dieser
zum Einbringen in die Bewegungsbahn der Tierkörper und zur
Herausbewegung aus der Bewegungsbahn der Tierkörper zu nutzen.

Bei der erfindungsgemäßen Vorrichtung kann das Sägeband denkbar
einfach geführt sein; vorzugsweise ist es um zwei Scheiben geführt, wobei die bauchseitig der Tierkörper befindliche Scheibe
angetrieben ist und die andere Scheibe eine reine Umlenkscheibe
ist. Vorzugsweise befinden sich die beiden so gebildeten Sägebandabschnitte übereinander, so daß der nicht sägende Abschnitt
im durch den Sägevorgang geschaffenen Spalt zurückläuft.

Eine besonders gute, im allgemeinen zusätzliche Führung der
Bandsäge läßt sich dadurch erreichen, daß man die Bandsäge mit
einem an der Rückseite des jeweiligen Tierkörpers abrollenden
Paar von Rollen ausrüstet, deren Umfangsflächen einen sich in
Richtung zum Tierkörper verbreiternden Führungsraum bilden. Dies
ergibt eine selbstzentrierende Führung. Vorzugsweise ist das
Rollenpaar federnd mit dem antriebsabgewandten, freien Endbereich der Bandsäge verbunden.

Für die vorstehend beschriebenen Bewegungsmöglichkeiten der
Bandsäge und der Saugnäpfe sind vorzugsweise jeweils eigene Antriebe vorgesehen. Pneumatische Antriebe mit geeigneten Zylinder-Kolben-Einheiten sind wegen ihrer unkomplizierten Konstruktion und Steuerung hierfür besonders geeignet. Für die
Bewegung der Bandsäge und der Saugnäpfe in Richtung der Weiterbewegung der Tierkörper ist jedoch ein Antrieb über einen Mitnehmer an der Förderkette, die auch die Tierkörper weiterbewegt,
bevorzugt.

Die Vorrichtung ist mit einer geeigneten Steuereinrichtung versehen, deren Auslegung im einzelnen im Rahmen fachmännischen Könnens liegt. Die Steuereinrichtung sorgt dafür, daß bei einem neu ankommenden Tierkörper die Saugnäpfe in Anlage an den Tierkörper gebracht werden, die Bandsäge vorgefahren wird, bis sich das Sägeband von der Bauchseite des Tierkörpers bis zu dessen Rückenseite durch die gespreizten Beine erstreckt, die Bandsäge in Betrieb gesetzt wird, die Bandsäge für den Sägevorgang in Längsrichtung des Tierkörpers bewegt wird, die Bandsäge zum Anfangspunkt des Sägevorgangs zurückgefahren wird, die Bandsäge nach außerhalb der Weiterbewegungsbahn des Tierkörpers zurückgefahren wird, die Saugnäpfe zurückgefahren werden und schließlich die Bandsäge und die Saugnäpfe entgegen der Weiterbewegungsrichtung der Tierkörper zurückgefahren werden, damit sie dort für den nächsten ankommenden Tierkörper bereitstehen. Die einzelnen Phasen des Arbeitsablaufs können durch Positionsschalter und/oder Zeitschalter gesteuert werden.

Es sei betont, daß die erfindungsgemäße Vorrichtung vollautomatisch arbeiten kann, so daß Bedienungspersonal höchstens für Überwachungsaufgaben benötigt wird. Statt der Mitbewegung der Bandsäge und der Saugnäpfe synchron zur Weiterbewegung der Tierkörper kann man auch während des Sägevorgangs die Weiterbewegung der Tierkörper anhalten und entsprechend auf die Mitbewegung der Bandsäge und der Saugnäpfe verzichten. Eine weitere Möglichkeit besteht darin, den jeweils zu sägenden Tierkörper mittels einer Weiche aus dem allgemeinen Weiterbewegungsweg auszuschleusen, dort im nicht-weiterbewegten Zustand zu sägen und dann wieder in den allgemeinen Weiterbewegungsweg einzuschleusen.

Die Erfindung wird im folgenden anhand eines zeichnerisch dargestellten Ausführungsbeispiels einer Vorrichtung zum automatischen Halbieren von Schweinen noch näher erläutert. Es zeigen:

Fig. 1    eine Stirnansicht der Vorrichtung, entgegen der Weiterbewegungsrichtung der Schweinekörper gesehen;

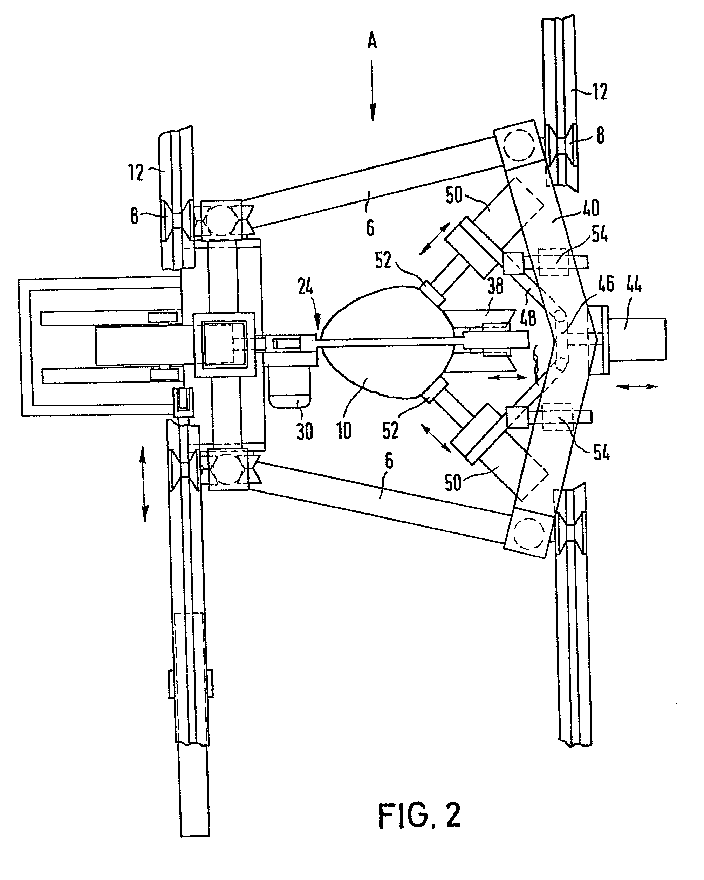

Fig. 2    eine Draufsicht auf die Vorrichtung gemäß Fig. 1,
         wobei aus Gründen der Klarheit einige Teile weggeschnitten sind.

Die Vorrichtung weist einen Rahmen 2 auf, der im wesentlichen
aus vier, in der Draufsicht an den Eckpunkten eines gedachten
Trapezes angeordneten, vertikalen Stangen 4 sowie drei, die unteren Enden der Stangen 4 bauchseitig des Schweinekörpers 10 und
in dessen Bewegungsrichtung vor und hinter dem Schweinekörper
10  miteinander verbindenden, horizontalen Stangen 6 besteht.
Jede Stange 4 ist an ihrem oberen Ende außen mit einer Rolle
8 mit winkelförmiger Profilierung ihres Umfangs versehen. Die
beiden der Bauchseite des Schweinekörpers 10 zugeordneten
Rollen 8 laufen auf einer entsprechend profilierten Schiene 12,
während die beiden der Rückenseite des Schweinekörpers 10 zugeordneten Rollen 8 auf einer weiteren, entsprechend profilierten Schiene 12 abrollen. Die beiden Schienen 12 sind beidseits und parallel zu einem Rohr 14 angeordnet, auf dem Haken
16 mit daran hängenden Schweinekörpern 10 weiterbewegt werden
können. Ein Schweinekörper 10 hängt jeweils mit einem Hinterbein an einem Haken 16 derart, daß die Hinterbeine gespreizt
sind.

Oberhalb des Rohrs 14 läuft eine nicht gezeichnete Förderkette
mit einer Reihe von Mitnehmern. Diese greifen hinter die Haken
16, so daß auf diese Weise die Schweinekörper 10 in Richtung
des Rohrs 14 weiterbewegt werden.

Zur Bewegung des Rahmens 2 synchron mit der Weiterbewegung der
Schweinekörper 10 längs des Rohrs wird ebenfalls die nicht gezeichnete Förderkette herangezogen. Zu diesem Zweck wird pneumatisch eine nicht dargestellte Stange quer zur Weiterbewegungsrichtung der Schweinekörper 10 derart ausgefahren, daß sie von einem Mitnehmer der Förderkette mitgenommen wird und ihrerseits den gesamten Rahmen 2 mitnimmt. Zur Zurückbewegung des Rahmens 2 nach beendetem Sägevorgang dient eine nicht gezeichnete Zylinder-Kolben-Einheit.

Auf der Bauchseite des Schweinekörpers 10 ist ein Bandsäge-Wagen 18 vorgesehen, der mit Rollen an den beiden der Bauchseite des Schweinekörpers 10 zugeordneten, vertikalen Stangen 4 geführt ist und entlang den Stangen 4 auf und ab verfahrbar ist.

Den entsprechenden Antrieb besorgt eine pneumatische Zylinder-Kolben-Einheit 20, die zwischen den beiden bauchseitigen Stangen 4 vertikal angeordnet ist.

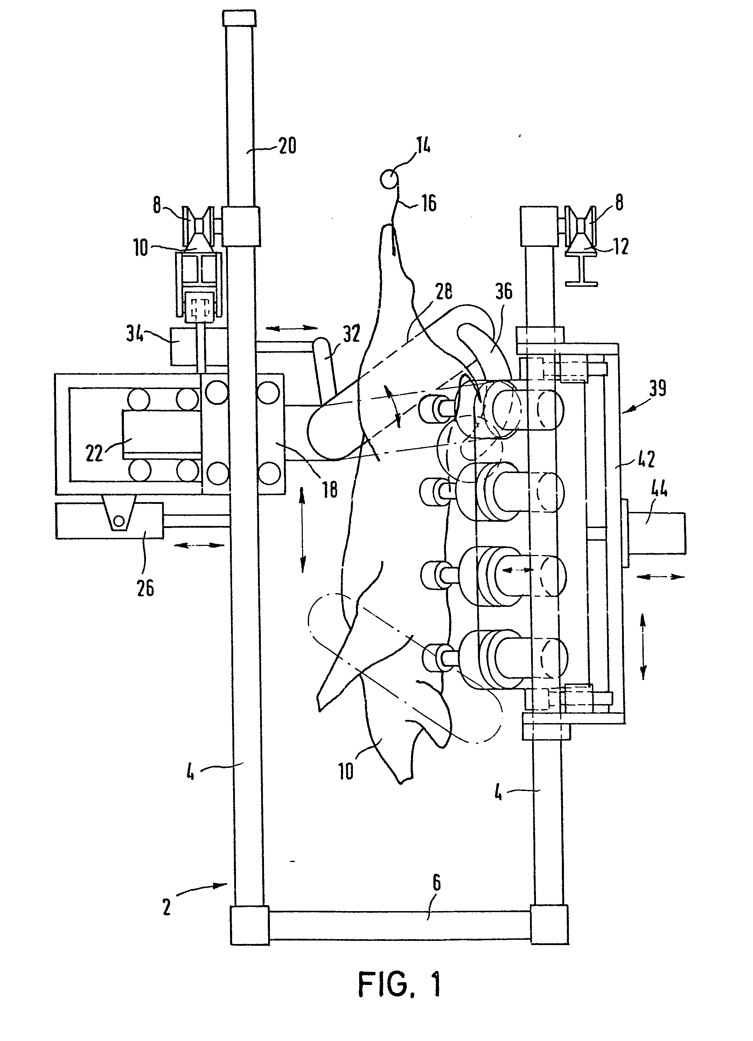

Der Bandsäge-Wagen 18 trägt einen Horizontalwagen 22, auf dem zwischen den Stäben 4 die eigentliche Bandsäge 24 angebracht ist. Der Horizontalwagen 22 ist mit Hilfe einer pneumatischen Zylinder-Kolben-Einheit 26, die sich am Bandsäge-Wagen 18 abstützt und in Fig. 1 hinter der linken Stange 4 mit dem Horizontalwagen 22 verbunden ist, in Horizontalrichtung zwischen einer Ruhestellung, in der sich die Bandsäge 24 vollständig auf der Bauchseite des Schweinekörpers 10 befindet, und einer Betriebsstellung, in der sich die Bandsäge von der Bauchseite zur Rückenseite über den gesamten Schweinekörper 10 erstreckt, verfahrbar.

Die Bandsäge 24 weist zwei nicht gesondert dargestellte Umlenkscheiben gleichen Durchmessers, um die das Sägeband 28 geführt ist, einen die beiden Scheiben halternden, nicht gesondert dargestellten Bandsägerahmen sowie einen Elektromotor 30 zum Antrieb der Bandsäge auf. Der Elektromotor 30 befindet sich zwischen den bauchseitigen Stangen 4 und dem Schweinekörper 10.

Vom Bandsägerahmen ragt ein Hebel 32 nach oben. Am oberen Ende des Hebels 32 ist die Kolbenstange einer pneumatischen Zylinder-Kolben-Einheit 34 angelenkt. Mit der Zylinder-Kolben-Einheit 34 läßt sich der Hebel 32 und damit der Bandsägerahmen um eine horizontale Achse, die mit der Achse der bauchseitigen Umlenkscheibe des Sägebandes 28 zusammenfällt, derart verschwenken, daß das Sägeband 28, von der Bauchseite des Schweinekörpers 10 aus gesehen, schräg aufwärts, im wesentlichen horizontal, oder schräg abwärts führt. Der Zylinder der Zylinder-Kolben-Einheit 34 ist auf dem Horizontalwagen 22 befestigt.

Im der Rückenseite des Schweinekörpers 10 zugeordneten Endbereich des Bandsägerahmens ist an diesem mittels eines bogenförmig nach unten führenden Bügels 36 ein Paar von Rollen 38 befestigt, wobei die Rollen 38 drehbar am Bügel 36 gelagert sind und der Bügel 36 durch eine nicht gezeichnete Druckfeder federnd mit dem Bandsägerahmen in Verbindung steht. Jede der Rollen 38 besitzt einen kegelförmigen Umfang, so daß von den beiden Rollen 38 ein winkelförmiger Führungsraum gebildet ist. Während der Abwärtsbewegung der Bandsäge rollen die Rollen 38 auf der Rückenseite des Schweinkörpers 10 beidseits der Wirbelsäule entlang, so daß eine rückenseitige, zusätzliche Führung der Bandsäge 24 geschaffen ist.

Von den beiden der Rückenseite des Schweinekörpers 10 zugeordneten Stangen 4 ist ein Saugnäpfe-Tragrahmen 39 getragen, der im wesentlichen aus einer oberen, von einer Stange 4 zur anderen Stange 4 führenden Winkelplatte 40, einer entsprechenden unteren Winkelplatte sowie einer die beiden horizontalen Winkelplatten miteinander verbindenden, vertikalen Platte 42 besteht. Die obere Winkelplatte 40 ist ein Stück unterhalb der oberen Enden der beiden zugeordneten Stangen 4 vorgesehen, und die untere Winkelplatte 40 ist ein Stück oberhalb der unteren Enden der beiden zugeordneten Stange 4 vorgesehen. Die Winkelplatten 40 weisen jeweils zwei, zueinander symmetrische Schenkel auf, die miteinander einen Winkel von etwa 150° bilden. Die vertikale Platte 42 ist an den Stellen dieser Winkeländerung mit den
Winkelplatten 40 verbunden. Von der vertikalen Platte 42
ist der Zylinder einer pneumatischen Zylinder-Kolben-Einheit
44 getragen, deren Kolbenstange auf einen vertikalen Träger
46 wirkt. Vom Träger 46 führen V-förmig auseinander in Richtung zum Schweinekörper 10 zwei Tragplatten 48. Am freien
Ende jeder Tragplatte 48 sind rechtwinklig vier pneumatische
Zylinder-Kolben-Einheiten 50 übereinander verteilt angebracht,
wobei jede Kolbenstange innen einen Saugnapf 52 trägt. Somit
sind zwei Reihen von Saugnäpfen 52 gebildet, die V-förmig
auf den Schweinekörper 10 zielen. Wenn die Saugnäpfe 52
mit dem Schweinekörper 10 in Eingriff sind, berühren sie
die Rückenseite des Schweinekörpers 10 beidseits neben den
Rollen 38. Zwischen den Tragplatten 48 und dem Saugnäpfe-
Tragrahmen 39 sind jeweils zwei pneumatische Zylinder-Kolben-
Einheiten 54 wirksam, mit denen die Tragplatten 48 um eine
vertikale Achse relativ zum Träger 46 schwenkbar sind. Mit
der Zylinder-Kolben-Einheit 44 können die Saugnäpfe 52 insgesamt dem Schweinekörper 10 genähert oder von diesem entfernt
werden. Mit den Zylinder-Kolben-Einheiten 50 können die Saugnäpfe 52 einzeln dem Schweinekörper 10 genähert, mit angesaugter Schweinekörperhälfte zurückgefahren und vom Schweinekörper entfernt werden, und können die Saugnäpfe 52 einzeln
auf die Kontur des Schweinekörpers 10 eingestellt werden.
Mit den Zylinder-Kolben-Einheiten 54 können die Saugnäpfe 52
schwenkend dem Schweinekörper 10 genähert oder von diesem entfernt werden oder auf die Gestalt des Schweinekörpers 10 eingestellt werden. Der Saugnäpfe-Tragrahmen 38 ist insgesamt mittels einer nicht dargestellten, pneumatischen Zylinder-Kolben-
Einheit längs der beiden zugeordneten Stangen 4 vertikal bewegbar.

Ein Arbeitszyklus der Vorrichtung kann beispielsweise folgendermaßen ablaufen: In einer Ausgangsstellung des Rahmens 2 wird
dann, wenn sich ein Schweinekörper 10 mittig gegenüber der Bandsäge 24 befindet und dies über Schalter erfaßt wird, die Bewegung des Rahmens 2 synchron und parallel zur Bewegung des Schweinekörpers 10 entlang dem Rohr 14 eingeschaltet. Dann wird der Horizontalwagen 22 so weit vorgefahren, daß sich die unangetriebene Umlenkscheibe zwischen dem Rücken des Schweinekörpers und den beiden, dem Rücken des Schweinekörpers 10 zugeordneten Stangen 4 befindet. Der untere, zum Sägen bestimmte Abschnitt des Sägebandes verläuft, ausgehend von der angetriebenen Umlenkscheibe, unter einem Winkel von etwa 30° aufwärts. Dann wird der Vorschub des Bandsäge-Wagens 18 in Vertikalrichtung abwärts eingeschaltet. Nachdem der Schwanzknochen gesägt ist, wird der Bandsägerahmen nach unten geschwenkt, bis der sägende Abschnitt des Sägebandes etwa horizontal liegt oder um einen geringen Winkel nach oben weist. Gegen Ende des Vorschubs des Bandsäge-Wagens 18 wird der Bandsägerahmen mit seinem freien Ende nach unten geneigt, bis der sägende Abschnitt des Sägebandes, ausgehend von der angetriebenen Umlenkscheibe, unter einem Winkel von etwa 30 bis 45° nach unten geneigt ist. Während des Vorschubs des Bandsäge-Wagens 18 nach unten kann man vorsehen, daß die Saugnapfpaare der Reihe nach von oben nach unten mit den entsprechenden Zylinder-Kolben-Einheiten 50 nach außen zurückgefahren werden, um den Schweinekörper 10 so von oben nach unten zu öffnen. Dann wird der Bandsäge-Wagen 18 nach oben zurückgefahren, unter gleichzeitigem Zurückschwenken des Bandsägerahmens nach oben. Anschließend wird der Horizontalschlitten 22 mitsamt der Bandsäge 24 quer zur Weiterbewegungsrichtung A des Schweinekörpers 10 zurückgefahren. Die Saugnäpfe 52, die anfangs zur gleichen Zeit wie die Bandsäge 24 mit Hilfe der Zylinder-Kolben-Einheit 44 quer zur Weiterbewegungsrichtung A des Schweinekörpers 10 bis zum Kontakt mit dem Schweinekörper 10 vorgefahren worden waren, werden nunmehr nach Abschalten ihres Unterdrucks mit der Zylinder-Kolben-Einheit 44 entgegengesetzt zurückgefahren, so daß der Schweinekörper 10 jetzt frei an den Haken 16 hängt. Jetzt wird der Rahmen 2 insgesamt entgegen der Weiterbewegungsrichtung A der Schweinekörper 10 in die Ausgangsstellung zurückgefahren, wo der nächste Zyklus mit einem neuen Schweinekörper 10 beginnen kann.

Wie vorstehend bereits indirekt beschrieben, bewegen sich also die Schweinekörper 10 seitlich entlang dem Rohr 14 und befinden sich die beiden Abschnitte des Sägebandes 28 jeweils zwischen den Umlenkscheiben vertikal übereinander.

Vorzugsweise wird die Sägerichtung des sägenden Abschnitts des Sägebandes 28 von der Bauchseite des Schweinekörpers 10 zu dessen Rückenseite gewählt, damit die Sägekräfte den Schweinekörper 10 gegen die Saugnäpfe 52 und die Rollen 38 drücken. Statt oder zusätzlich zu den Rollen 38 kann eine walzenartige, auf der Bauchseite des Schweinekörpers 10 unterhalb der Bandsäge 24 ablaufende Rolle vorgesehen sein.

Das Sägeband wird hinter bzw. vor den Umlenkscheiben durch kleine Rollen um 90° gedreht, damit es auf den Umlenkscheiben umgelenkt werden kann.

**ELISABETH JUNG** DR. PHIL., DIPL.-CHEM.
**JÜRGEN SCHIRDEWAHN** DR. RER. NAT., DIPL.-PHYS.
**GERHARD SCHMITT-NILSON** DR.-ING.
**GERHARD B. HAGEN** DR. PHIL. †
**PETER HIRSCH** DIPL.-ING.

PATENTANWÄLTE
EUROPEAN PATENT ATTORNEYS

8000 MÜNCHEN 40,
P. O. BOX 40 14 68
CLEMENSSTRASSE 30
TELEFON: (089) 34 50 67
TELEGRAMM/CABLE: INVENT MÜNCHEN
TELEX: 5-29 686

· 7-    **0067331**

Q 987M2 (Dr.SchN/ba)


BANSS KG Maschinenfabrik

Industriestraße                     26.Mai 1982

D-3560 Biedenkopf


---

Vorrichtung zum Halbieren von Schlachttierkörpern mittels einer Bandsäge

---


A n s p r ü c h e


1.    Vorrichtung zum automatischen Halbieren der Körper geschlachteter Tiere, insbesondere Schweine, die hängend kontinuierlich weiterbewegt werden, mit Hilfe einer Bandsäge, **d a d u r c h   g e k e n n z e i c h n e t ,**

(a) daß der jeweilige Tierkörper (10) rückseitig beidseits der Wirbelsäule während des Sägevorgangs mit Hilfe von Saugnäpfen (52) in seiner Lage gehalten ist;

(b) daß die Bandsäge (24) und die Saugnäpfe (52) mit einer der Weiterbewegungsgeschwindigkeit der Tierkörper (10) entsprechenden Geschwindigkeit in Richtung der Weiterbewegung der Tierkörper (10) bewegbar sind;

(c) daß die Bandsäge (24) für den Sägevorgang in Längsrichtung des jeweiligen Tierkörpers (10) bewegbar ist und

(d) daß die Bandsäge (24) zwischen einer Betriebsstellung, in der das Sägeband (28) auf den jeweiligen Tierkörper (10) vom Bauchbereich zum Rückenbereich einwirken kann, und einer Ruhestellung, in der sich das Sägeband (28) außerhalb der Weiterbewegungsbahn der Tierkörper (10) befindet, hin und her bewegbar ist.

2.    Vorrichtung nach Anspruch 1, dadurch gekennzeichnet, daß der Winkel, den der jeweils sägende Abschnitt des Sägebandes (28) in der Ebene des Sägevorgangs mit der Längsrichtung des Tierkörpers (10) bildet, änderbar ist.

3.    Vorrichtung nach Anspruch 1 oder 2, dadurch gekennzeichnet, daß auf jeder Seite der Wirbelsäule des Tierkörpers (10) mehrere Saugnäpfe (52) längs des Tierkörpers (10) verteilt vorgesehen sind.

4.    Vorrichtung nach einem der Ansprüche 1 bis 3, dadurch gekennzeichnet, daß die Saugnäpfe (10) von einem Saugnäpfe-Tragrahmen (38) gehalten sind und daß der Saugnäpfe-Tragrahmen (39) dem jeweiligen Tierkörper (10) näherbar und von diesem entfernbar ist.

5.    Vorrichtung nach einem der Ansprüche 1 bis 4, dadurch gekennzeichnet, daß die Saugnäpfe (52), vorzugsweise einzeln, in ihrer Axialrichtung bewegbar sind.

6.    Vorrichtung nach einem der Ansprüche 1 bis 5, dadurch gekennzeichnet, daß die Saugnäpfe (52) einzeln oder pro Saugnapfreihe gemeinsam schwenkbar sind.

7.    Vorrichtung nach einem der Ansprüche 1 bis 6, dadurch gekennzeichnet, daß die beidseitig der Wirbelsäule vorgesehenen Saugnäpfe (52) in Draufsicht V-förmig angeordnet sind.

8.     Vorrichtung nach einem der Ansprüche 1 bis 7, dadurch gekennzeichnet, daß das Sägeband (28) um zwei Scheiben geführt ist, vorzugsweise unter Bildung von zwei parallelen Sägebandabschnitten, und daß die bauchseitig der Tierkörper (10) befindliche Scheibe angetrieben ist.

9.     Vorrichtung nach einem der Ansprüche 1 bis 8, dadurch gekennzeichnet, daß die Bandsäge (24) an der Rückseite des jeweiligen Tierkörpers (10) durch ein Paar von Rollen (38) geführt ist, deren Umfangsflächen einen sich in Richtung zum Tierkörper (10) verbreiternden Führungsraum bilden.

10.     Vorrichtung nach Anspruch 9, dadurch gekennzeichnet, daß das Rollenpaar federnd mit dem antriebsabgewandten, freien Endbereich der Bandsäge (24) verbunden ist.

11.     Vorrichtung nach einem der Ansprüche 1 bis 10, dadurch gekennzeichnet, daß für die Bewegung der Bandsäge (24) gemäß Anspruch 1(b) und/oder für die Bewegung der Saugnäpfe (52) gemäß Anspruch 1(b) und/oder für die Bewegung der Bandsäge (24) gemäß Anspruch 1(c) und/oder für die Bewegung der Bandsäge (24) gemäß Anspruch 1(d) und/oder für die Winkeländerung des Sägebandes (28) gemäß Anspruch 2 und/oder für die Bewegung des Saugnäpfe-Tragrahmens (39) gemäß Anspruch 4 und/oder für die Bewegung der Saugnäpfe (52) gemäß Anspruch 5 und/oder für die Schwenkung der Saugnäpfe gemäß Anspruch 6 pneumatische Antriebe vorgesehen sind.

FIG. 1

FIG. 2